# EUROPEAN PATENT SPECIFICATION

(11) **EP 0 736 195 B1**
(45) Date of publication and mention of the grant of the patent: **25.03.1998**
(21) Application number: 95905071.7
(22) Date of filing: 19.12.1994
(51) Int. Cl.: G02C 5/22

(54) **ELASTIC HINGE FOR SPECTACLE EAR PIECES**
FEDERSCHARNIER FUER BRILLENBUEGEL
CHARNIERE ELASTIQUE POUR BRANCHES DE LUNETTES

(30) Priority: 24.12.1993 IT BL930030
(43) Date of publication of application: 09.10.1996
(73) Proprietor: SOVER S.P.A., 32010 Soverzene (IT)
(72) Inventor: OSTINET, Roberto, I-31029 Vittorio Veneto (IT); DELL'ACQUA, Eugenio, I-31040 Segusino (IT)
(74) Representative: Wablat, Wolfgang, Dr.Dr.
(86) International application number: EP9404182
(87) International publication number: WO9518398

(56) References cited:
- EP-A- 0 003 928
- EP-A- 0 430 756
- EP-A- 0 455 999
- FR-A- 2 028 893
- FR-A- 2 609 816

## Description

The present invention relates to a new elastic hinge between spectacle ear pieces and the frame.

The substantial innovative feature of this invention is the production of a hinge without a hinge pin or screw. The hinge according to the invention has a lug with a head that is fitted into the ear piece and protrudes into a slot to allow for direct or indirect connection with the spectacle frame.

There are numerous elastic hinge systems known for spectacle frames and ear pieces, all of which have the target of controlling the pressure of ear pieces on the temples, thus making the spectacles more comfortable to wear. These well-known systems are generally designed so that the elastic force, stored in the ear pieces upon opening, is regulated through an elastic compression or traction device against a stop contained in the ear piece and brought into contact against the hinge support incorporated in the frame. All these systems make use of a screw or hinge pin which is fitted through the slot created by the hinge support located on the frame.

All these hinge systems present considerable difficulties with respect to mounting the pin or screw, because this must be performed while the elastic device is under stress, and therefore when the stability of the parts to-be-joined is precarious. For this reason all the presently produced types of hinges require special, and expensive, assembly devices or cursors. Other hinge systems are known which make use of elastic bending devices, but these are also based on a hinge with a hinge pin or screw. Thus, these systems also require the preloading of a spring or an elastic lamina, so that the centering of the pin or screw between the slot in the support and the holes in the ear piece always present a problem. An elastic hinge system, for example, which has the above-mentioned disadvantage is known from EP-A-430 756.

All the known hinge systems also have the disadvantage that during opening and closing at least one corner on the ear piece is protruding. This is the corner at the end of the ear piece which is necessary to achieve the maximum opening. This protruding corner lends an unpleasant appearance, and sometimes catches on the wearer's clothing or other items when they come in contact.

The main purpose of this invention is to provide a hinge system to mount the ear pieces onto the frame without using a fulcrum screw or hinge pin, and thus avoiding all the consequent operating and practical problems associated with hinges in which the hinge pin is fitted via preloading of the elastic device.

Another purpose of the invention is the avoidance of sharp corners at all times, during opening, using or closing of the spectacles ear pieces, thus eliminating all risks of snagging.

Yet another purpose is to allow maximum simplification of construction while producing elastic hinges with a minimum of bulk, out of a few simple parts, thus eliminating the need for extra containers to house the elastic devices and cursors.

Another purpose of this invention is to be able to exploit the hinge area for decorative functions too, especially making use of a spherical shape at the end of the ear pieces in combination with the front of the frame.

These and other purposes of the invention are perfectly achieved with the proposed invention, as demonstrated by the following description of one constructive solution, which serves purely as an example without any kind of limitation; this solution is illustrated with the aid of 9 figures illustrated on two attached pages:
Fig. 1 on the first page attached shows a view of an axial section of a bush containing the device concerned;
Fig. 2 on page 1 shows the outline of the axial section of the bush depicted in Fig. 1;
Fig. 3 on page 1 shows a cross section view through the plane defined as III-III in Fig. 1;
Fig. 4 on page 1 shows a perspective view of a bolt, used to connect the ear piece to the front of the frame;
Fig. 5 on page 1 shows a perspective view of a plunger with a guide for an elastic device;
Fig. 6 on page 1 shows the outline of the particular system for the application of the bolt for connecting the ear piece to the front of the frame;
Fig. 7 on the second page attached shows a view of an axial section of the hinge produced according to the invention;
Fig. 8 on page 2 shows the outline of the hinge depicted in Fig. 6 with the connected elements aligned corresponding to the normal opening of the ear piece;
Fig. 9 on page 2 shows an outline of the hinge depicted in Fig. 7 with the connected elements partly folded towards one another;
Fig. 10 on page 2 shows an outline of the hinge depicted Fig. 6 with the connected elements folded into the closed position with the ear pieces next to the frame. In all the figures the same elements are represented or are understood as being represented with the same reference number.

The elastic hinge according to the present invention consists essentially of a bolt 10 and a bush 1 having a bore 2 and being incorporated in the ear piece 30, wherein one end of the bolt is engaged in the bore, while the opposite end of the bolt is arranged to be connected to a frame element 13 linked to the front of the spectacle frame, and wherein the bore has a constriction 3 and an opening 5. The invention is characterized in that the bush 1 is provided with a slot 4, one end of the bolt 10 is suitably shaped so that it can be engaged against the constriction 3 of the bore 2, and the bolt has a flat part 12 suitably shaped so that the bolt can be rotated inside the bore to allow a movement of the ear piece 30 within the limits imposed by the slot 4.

At the position of the constriction 3, the bush 1 has an external surface with spherical shape 6 which has a predominately aesthetic function. The slot 4 is preferably provided in one side of the spherical area 6, for contact reasons which are better illustrated below.

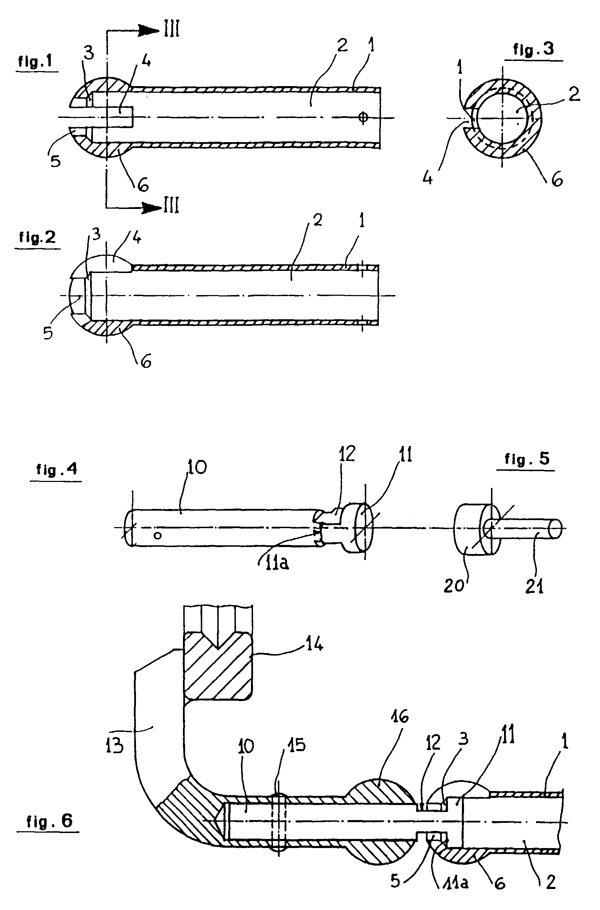

A bolt 10 is passed into the bore 2 of the bush 1. The bush 10 may be composed of a cylindrical piece with one end having an increased diameter 11, a cylindrical part with normal diameter 10 and a part of the enlarged cylindrical area 11 suitable milled to obtain a flattend part 12. The same bore 2 of bush 1 will also be loaded with the plunger 20 which is provided with a peg 21. The plunger 20 acts solely as a contact stop and guide for a helical spring 22 which is fitted between the plunger 20 and the perforated end 31 of the ear piece 30. Having thus described the few and simple parts of the invention, their operation is described below, with special reference to Figures 6 to 10.

The bolt 10 is passed into the bore 32 of bush 1 until the edge 11a of the enlarged cylindrical part 11 comes into contact with the constriction 3 of the bush 1. Reaching this position, the bolt 10 is turned axially inside the bore 2 until the flat part 12 is aligned with the slot 4 in bush 1. Fitting the flat part 12 into the slot 4 enables the bolt 10 to be inserted further in the bush, to a depth equal to the length of the flat area 12 on the enlarged cylindrical part 11.

The subsequent application of the plunger 20 and the helical spring 22, suitably compressed in the bore 32 of the ear piece 30 and fastened with the pin 31 or a screw or another known fastening system, allows the bolt 10 to be hinged onto the end of the ear piece 30 without using any traditional screws of hinge pins, which due to compression of the elastic device are always difficult to fit in their housings; in this way the principal purpose of the invention is fulfilled.

Regarding figures 6 to 10, it can be clearly seen that once the bolt 10 has been guided through bush 1, it is covered with a frame element 13 which is suitably shaped so that it can be welded or in some way firmly anchored to the glass frame 14 of the spectacle, whereby the frame element 13 may be combined with the bolt 10 by means of the pin 15 or some other known detachable fastening system.

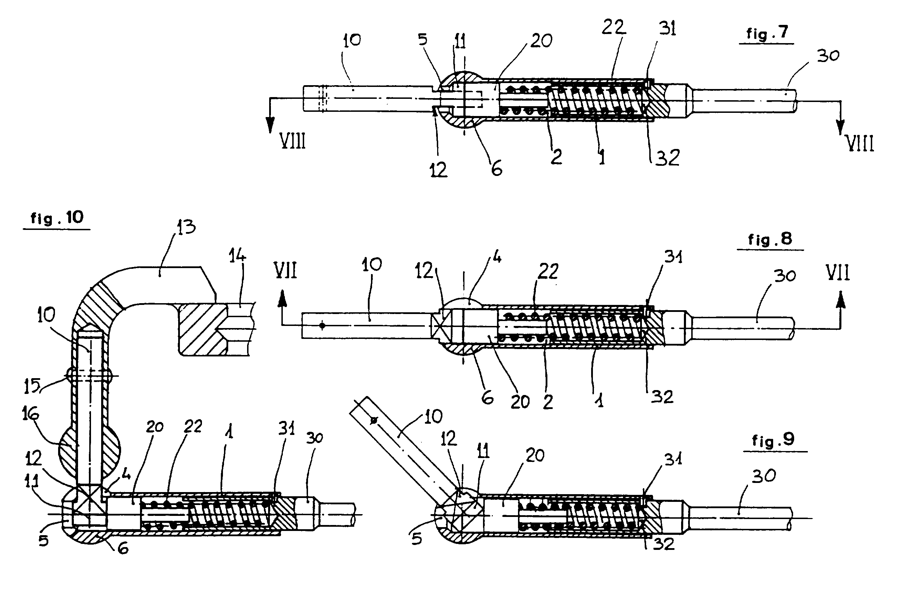

Regarding Figures 8 to 10, it is also clear that the edge 11a of the enlarged part 11 rests on the edge of the constriction 3 of the internal bore 2 of bush 1, and that the presence of slot 4 allows the flat part 12 to move inside the same slot 4. This movement entails the rotation of the entire lug in the whole width of the slot 4, thus allowing the opening and closing of the ear piece 30 on the frame 14 and thus the front of the spectacle frame.

During this rotation the edge 11a of the enlarged end 11 is always engaged against the edge of constriction 3 forcing the plunger 20 to move back axially and at the same time compressing the spring 22 so as to favour the release effect between the opened and closed position of the ear piece 30.

Of course the opening angle of the ear piece 30 is determined by the angular width of slot 4, particularly towards the internal side of the hinge, but also towards the outside to allow super-opening of the ear piece 30. The proposed solution does not present any sharp edges during opening or closing, and its operation is extremely simple and functional according to several of the purposes mentioned.

Still with reference to Figures 6 and 10, it may be noted that the frame element 13 has a spherical-shaped end 16 with a diameter that is approximately equal to the diameter of the spherical shape 6 of bush 1. This device makes it possible to create hinges that possess not only the functional features already described, but also an aesthetic look.

In this sense the spherical or cylindrical end 6 of the bush 1 may be combined with the spherical or cylindrical part 16 of the frame element 13, in accordance with a series of ornamental solutions that are covered by a patent application concerning an ornamental model. Of course the proposed constructive solution is to be considered purely an example without any kind of limitation. It is possible to produce bush 1 which taper off between 2 and 5 and without the constriction 3; likewise the helical spring 22 may be replaced with another suitable elastic device.

These and other similar innovations or adaptations are to be considered as included in the original nature of the invention to be protected.

## Claims

1. An elastic hinge for spectacle ear pieces comprising a bolt (10) and a bush (1) having a bore (2) and being incorporated in the ear piece (30), wherein one end of the bolt (10) is engaged in the bore (2) while the opposite end of the bolt (10) is arranged to be connected to a frame element (13) linked to the front (14) of the spectacle frame, and wherein the bore (2) has a constriction (3) and an opening (5), characterized by the fact that the bush (1) is provided with a slot (4), one end (11) of the bolt (10) is suitably shaped so that it can be engaged against the constriction (3) of the bore (2), and the bolt has a flat part (12) suitably shaped so that the bolt (10) can be rotated inside the bore (2) to allow a movement of the ear piece (30) within the limits imposed by the slot (4).

2. An elastic hinge for spectacle ear pieces according to claim 1, characterized by the fact that the ear piece (30) is detachably connected with the bush (1).

3. An elastic hinge for spectacle ear pieces according to claims 1 or 2, characterized by the fact that the bolt (10) has a cylindrical body with a cylindrical end (11) with increased diameter and that the flat part (12) is disposed between the enlarged end (11) and the cylindrical part of the bolt (10) having a normal diameter.

4. An elastic hinge for spectacle ear pieces according to claims 1 to 3, characterized by the fact that the bolt (10), once combined with the bush (1), is suitably shaped so that it can be connected with a frame element (13) onto the front (14) of the spectacle frame, preferably by means of a pin (15) or another detachable fastening system.

5. An elastic hinge for spectacle ear pieces according to claims 1 to 4, characterized by the fact that the positioning of the enlarged end (11) of the bolt (10) in the bore (2) is determined by a plunger (20), preferably provided with a peg (21) against which an elastic device (22) is applied, wherein the elastic device (22) is mounted in a bore (32) of the ear piece (30).

6. An elastic hinge for spectacle ear pieces according to claims 1 to 5, characterized by the fact that the hinged end of the bush (1) and the end of the frame element (13) are spherically shaped or produced in other shapes compatible with various aesthetic solutions.

## Patentansprüche

1. Federscharnier für Brillenbügel, umfassend einen Bolzen (10) und eine in den Bügel (30) integrierte Buchse (1) mit einer Bohrung (2), wobei ein Ende des Bolzens (10) in der Bohrung (2) gelagert ist, während das gegenüberliegende Ende des Bolzens (10) so angebracht ist, daß es mit einem mit der Front (14) des Brillenrahmens verbundenen Rahmenelement (13) verbunden vorliegt, und wobei die Bohrung (2) eine Einschnürung (3) und eine Öffnung (5) aufweist, dadurch gekennzeichnet, daß die Buchse (1) mit einem Schlitz (4) versehen ist, ein Ende (11) des Bolzens (10) zweckmäßigerweise so geformt ist, daß es mit der Einschnürung (3) der Bohrung (2) in Eingriff kommen kann, und der Bolzen einen flachen Teil (12) aufweist, der geeigneterweise so geformt ist, daß der Bolzen (10) in der Bohrung (2) gedreht werden kann, um so eine Bewegung des Bügels (30) innerhalb von dem Schlitz (4) bestimmter Grenzen zu ermöglichen.

2. Federscharnier für Brillenbügel nach Anspruch 1, dadurch gekennzeichnet, daß der Bügel (30) abnehmbar mit der Buchse (1) verbunden ist.

3. Federscharnier für Brillenbügel nach den Ansprüchen 1 oder 2, dadurch gekennzeichnet, daß der Bolzen (10) einen zylinderförmigen Körper mit einem zylinderförmigen Ende (11) mit vergrößertem Durchmesser aufweist und daß der flache Teil (12) zwischen dem vergrößerten Ende (11) und dem zylindrischen Teil des Bolzens (10) mit normalem Durchmesser angebracht ist.

4. Federscharnier für Brillenbügel nach den Ansprüchen 1 bis 3, dadurch gekennzeichnet, daß der Bolzen (10), wenn er mit der Buchse (1) zusammengefügt vorliegt, geeigneterweise so geformt ist, daß er - bevorzugterweise mittels einer Niete (15) oder einem anderen abnehmbaren Befestigungssystem - mit einem Rahmenelement (13) auf der Vorderseite (14) des Brillenrahmens verbunden werden kann.

5. Federscharnier für Brillenbügel nach den Ansprüchen 1 bis 4, dadurch gekennzeichnet, daß die Positionierung des vergrößerten Endes (11) des Bolzens (10) in der Bohrung (2) durch einen bevorzugterweise mit einem Zapfen (21) versehenen Kolben (20) bestimmt wird, gegen den eine elastische Vorrichtung (22) angebracht ist, wobei die elastische Vorrichtung (22) in einer Bohrung (32) des Bügels (30) befestigt ist.

6. Federscharnier für Brillenbügel nach den Ansprüchen 1 bis 5, dadurch gekennzeichnet, daß das schwenkbare Ende der Buchse (1) und das Ende des Rahmenelements (13) eine runde Form aufweisen oder in anderen mit verschiedenen ästhetischen Lösungen vereinbaren Formen hergestellt sind.

## Revendications

1. Charnière élastique pour branches de lunette comprenant un goujon (10) et une douille (1) comportant un alésage (2) et étant incorporée dans la branche (30) de lunette, dans laquelle une extrémité du goujon (10) est engagée dans l'alésage (2) alors que l'extrémité opposée du goujon (10) est agencée pour être raccordée à un élément (13) de monture relié à l'avant (14) de la monture de lunette, et dans laquelle l'alésage (2) comporte un rétrécissement (3) et une ouverture (5), caractérisée en ce que la douille (1) est munie d'une fente (4), une extrémité (11) du goujon (10) ayant une forme adaptée de manière à pouvoir être engagée contre le rétrécissement (3) de l'alésage (2), et en ce que le goujon comporte une partie plane (12) de forme adaptée pour que le goujon (10) puisse tourner à l'intérieur de l'alésage (2) pour permettre un mouvement de la branche (30) dans les limites imposées par la fente (4).

2. Charnière élastique pour branches de lunette selon la revendication 1, caractérisée en ce que la branche (30) est raccordée de façon libérable à la douille (1).

3. Charnière élastique pour branches de lunette selon la revendication 1 ou 2, caractérisée en ce que le goujon (10) comporte un corps cylindrique muni d'une extrémité cylindrique (11) présentant un diamètre plus grand et en ce que la partie plane (12) est disposée entre l'extrémité élargie (11) et la partie cylindrique du goujon (10) comportant un diamètre normal.

4. Charnière élastique pour branches de lunette selon les revendications 1 à 3, caractérisée en ce que le goujon (10), une fois combiné avec la douille (1), a une forme adaptée de manière qu'il puisse être raccordé avec l'élément (13) de monture sur l'avant (14) de la monture de lunette, de préférence au moyen d'une broche (15) ou d'un autre système d'attache libérable.

5. Charnière élastique pour branches de lunette selon les revendications 1 à 4, caractérisée en ce que le positionnement de l'extrémité élargie (11) de la broche (10) dans l'alésage (2) est déterminé par un plongeur (20), de préférence muni d'une cheville (21), contre lequel un dispositif élastique (22) est appliqué, dans laquelle le dispositif élastique (22) est monté dans un alésage (32) de la branche (30).

6. Charnière élastique pour branches de lunette selon les revendications 1 à 5, caractérisée en ce que l'extrémité articulée par la charnière de la douille (1) et l'extrémité de l'élément (13) de monture ont des formes sphériques ou sont fabriquées avec d'autres formes compatibles avec des solutions esthétiques diverses.
